**Europäisches Patentamt**

**European Patent Office**

**Office européen des brevets**

(19)

(11) **EP 1 011 291 A2**

(12) # EUROPEAN PATENT APPLICATION

(43) Date of publication:
**21.06.2000 Bulletin 2000/25**

(51) Int Cl.⁷: $H04Q\ 11/04$

(21) Application number: **99309829.2**

(22) Date of filing: **07.12.1999**

(84) Designated Contracting States:
**AT BE CH CY DE DK ES FI FR GB GR IE IT LI LU
MC NL PT SE**
Designated Extension States:
**AL LT LV MK RO SI**

(30) Priority: **18.12.1998 US 215422**

(71) Applicant: **LUCENT TECHNOLOGIES INC.
Murray Hill, New Jersey 07974-0636 (US)**

(72) Inventors:
• **Elwalid, Anwar
  Murray Hill, New Jersey 07974 (US)**
• **Widjaja, Indra
  Raleigh, North Carolina 27615 (US)**

(74) Representative:
**Watts, Christopher Malcolm Kelway, Dr. et al
Lucent Technologies (UK) Ltd,
5 Mornington Road
Woodford Green Essex, IG8 0TU (GB)**

(54) **VC-merge-capable label switching routers for IP communications over ATM networks**

(57)    A VC-merge capable ATM switch allows many
routes to be mapped to the same VC label, thereby pro-
viding a scalable mapping that can support a large
number of edge routers. Such VC merging uses reas-
sembly buffers to insure that cells belonging to different
packets intended for the same destination do not inter-
leave with each other. An output-buffered ATM Label
Switching Router (ATM LSR) is described that supports
VC merging capability while incurring minimal additional
buffering overhead compared to non-VC merging ap-
proaches.

*FIG. 3*

**Description**

**Field of the Invention**

The present invention relates to high-speed, high-capacity data networks such as the Internet. More particularly, the present invention relates to networks comprising Asynchronous Transfer Mode (ATM) switches for use in such networks. Still more particularly, the present invention relates to high-speed output-buffered ATM switches using label switching to provide low overhead processing of data.

**Background of the Invention**

The explosive growth of Internet traffic in recent years has imposed great stress on today's data routers, particularly in the core network. This condition has given rise to a number of proposals to overhaul the router architectures presently in place. Although differing in many of their details, one fundamental aspect shared by many of these proposals is to map route information for data packets to short, fixed-length identifiers known as "labels" so that next-hop routers can be determined quickly through indexing rather than searching (or matching longest prefixes). Such routers have come to be known as "label switching routers" or LSRs, and are often described in terms of protocols based on the seven-layer structure of the Open Systems Interconnection (OSI) model.

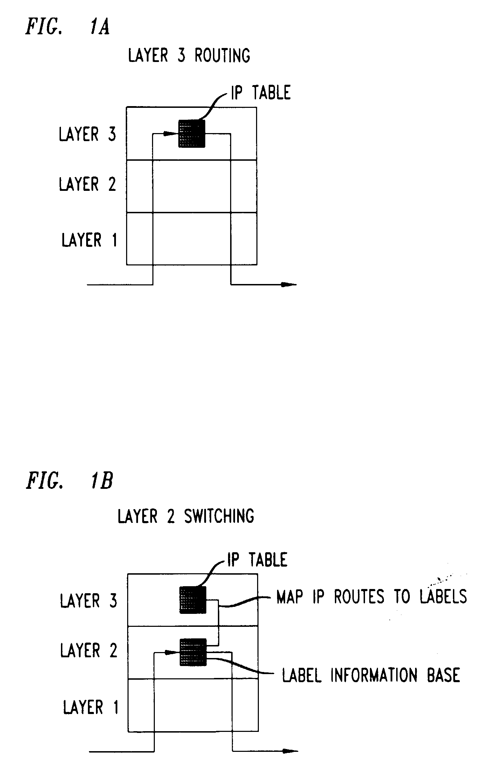

Current practice in forwarding Internet Protocol (IP) packets is illustrated in FIG. 1A, where OSI layer 3 routing is usually implemented in software. By mapping the routes to short labels, as in FIG. 1B, packet forwarding speed is no longer limited by table look-up -- a main cause of bottlenecks in very high-speed routers. Moreover, packet forwarding using the LSR of FIG. 1B can be made much faster by using hardware switching. Another advantage of this approach is that when the underlying switches are scalable the forwarding speed will scale as well.

The Internet Engineering Task Force has established a working group on MultiProtocol Label Switching (MPLS) to develop, *inter alia,* a standardized label swapping paradigm that integrates OSI layer 3 routing with OSI layer 2 switching. See, for example, Callon, R., P. Doolan, N. Feldman, A. Fredette, G. Swallow and A. Viswanathan, " A Framework for Multiprotocol Label Switching," Internet Draft, May, 1997. Issues under study by this group include label semantics, label mapping, forwarding methods, label distribution methods, scalability issues, and looping problems. The group has also published on-line documents including an Internet Draft entitled "A Proposed Architecture for MPLS," By Rosen, E.C., A. Viswanathan and R. Callon, August, 1997, available as http://www.ietf.org/internet-drafts/draft-ietf-mpls-arch-00.txt .

Although any layer 2 switching mechanism can in principle be applied in MPLS, the use of ATM switches in backbone networks is widely believed to offer promise as a preferred solution. In other contexts, ATM technology has been shown to be capable of supporting multiple quality of service (QoS) requirements simultaneously, and to scale to any bandwidth subject only to the physical-layer limitation. Typical layer 2 switching using ATM technology permits each IP packet to be segmented to multiple 53-byte cells before being switched. Label Switching Routers (LSRs) based on ATM technology will be referred to as ATM LSRs in this specification. ATM Adaptation Layer 5 (AAL 5) has been used as the encapsulation method in many ATM data communications systems, since it is simple, efficient, and has a powerful error detection mechanism. For ease of discussion, embodiments described herein will be assumed to use AAL 5 unless otherwise stated. Such use of AAL 5 should not be read as a limitation on the scope of the present invention, however.

For an ATM LSR to forward incoming cells to the correct outputs, the IP route information must be mapped to ATM labels which are typically kept in the Virtual Path Identification (VPI) or/and Virtual Circuit Identifier (VCI) fields of ATM cells. The relevant route information that is stored semi-permanently in the IP routing table contains the tuple (destination, next-hop router). The route information changes when the network state changes, which typically occurs slowly - except during a transient case. The term "destination" typically refers to the destination network (or CIDR prefix), but can be generalized for MPLS and other applications to (destination network, QoS), (destination host, QoS), or any of many other granularities. For present discussion purposes the destination can mean any of the above or other possible component granularities.

Several methods of mapping route information to ATM labels exist. In the simplest form, each source-destination pair is mapped to a unique Virtual Circuit (VC) value at a switch. This method, called the *non-VC-merging* case, allows the receiver to easily reassemble cells into respective packets since the VC values can be used to distinguish the senders. However, if there are $n$ sources and destinations, each ATM LSR is potentially required to manage $O(n^2)$ VC labels for full-meshed connectivity. For example, if there are 1,000 sources/destinations, then the size of the VC routing table for the non-VC-merging case is on the order of 1,000,000 entries. Clearly, this method is not scalable to very large networks.

In a second method called VP *merging,* the Virtual Path (VP) labels of cells intended for the same destination are translated to the same outgoing VP value, thereby reducing VP consumption downstream. For each VP, the VC value (or VCI) is used to identify the sender so that the receiver can reconstruct packets even though cells from different packets are allowed to interleave. For a given destination, the ATM LSR would encounter $O(e)$ incoming VP labels , where $e$ *is* the number of switch ports (typically, 8 to 16) which may depend on the network size (or $n$). If there are $n$ destinations, each switch is now required to manage $O(en)$ VP labels - a considerable saving from $O(n^2)$. Although the number of label entries is considerably reduced, VP merging is not practical for all contexts, since the VP space is typically limited to only 4,096 entries at the network-to-network interface.

A third approach, called *VC merging,* maps incoming VC labels for the same destination to the same outgoing VC label. This method is scalable and does not have the space constraint problem as in VP merging. With VC merging, cells for the same destination are indistinguishable at the output of an ATM LSR. Therefore, safeguards must be taken during packet reassembly to avoid having cells belonging to different packets that are directed to the same destination interleave with each other. If it is otherwise, correct delivery of the packets cannot be assured.

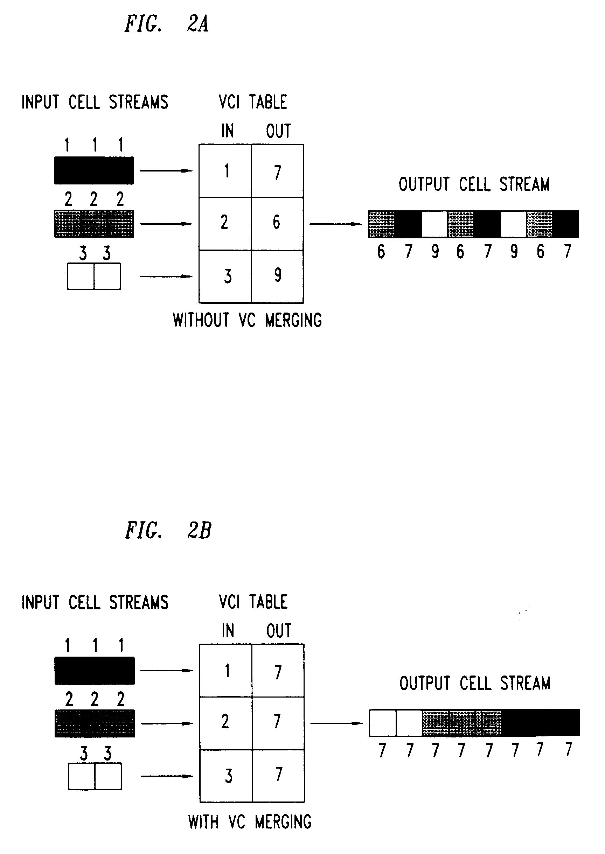

FIGs. 2A and 2B illustrate a key difference between VC merging (FIG. 2B) and non-VC merging (FIG. 2A). The three input cell streams in each case correspond to three incoming packets. It is assumed that the three packets are intended for the same destination. In the VC-merging case, cells from different packets cannot interleave since they share the same VC value. The boundary between two adjacent packets is identified, *e.g.*, by the "End-of- Packet" (EOP) marker used by AAL 5.

It is worthy of mention that cell interleaving may be allowed if other techniques, including use of an AAL 3/4 Message Identifier (MID) field, are employed to identify the sender uniquely. However, this method has some serious drawbacks, *viz.,*

1) the MID size may not be sufficient to identify all senders,

2) the encapsulation method is not efficient,

3) the CRC capability is not as powerful as in AAL 5, and

4) AAL 3/4 is not as widely supported in data communications as AAL 5.

While VC merging with no cell interleaving offers a most promising approach, some important issues remain. Initially, the feasibility of an ATM LSR capable of merging VCs must be determined and overall system design must be accomplished. Additionally, structures for performing buffering required to implement VC merging must be completed. Since concerns have been expressed that VC merging may require buffering of such magnitudes as to make the approach impractical, performance impacts of VC merging system design parameters must be evaluated and chosen for practical applications.

## Summary of the Invention

The above limitations of the prior art are overcome and a technical advance is made in accordance with the present invention, which is described in terms of several illustrative embodiments herein.

A basic structure for an ATM LSR is disclosed, illustrative embodiments of which are capable of performing VC merging without imposing burdensome buffering requirements. More particularly, embodiments described reflect a number of possible design tradeoffs offering advantages under different operating conditions. In overall aspect, a generic output-buffered VC-merge-capable ATM LSR is disclosed that advantageously comprises a common memory pool for cell reassembly and output buffering.

In one particular illustrative embodiment based on this generic ATM LSR, VC-merging is accomplished though the appending to each input cell of fields containing information identifying the output port and input port. The output port information is used in the ATM system to route the cell to the desired output port. The input port information is used to direct the cell to a reassembly buffer associated with the identified input port and incoming VC. When all cells of an input packet identified with an input port and incoming VC have been placed in the reassembly buffer, the packet is merged with other packets identified with the VC, and the merged packets are delivered to an output buffer for delivery to the next hop.

Alternative embodiments provide a plurality of output buffers at one or more output ports to permit reassembled packets to be segregated by Quality of Service (QoS) and merged in accordance with a desired VC merge scheduling algorithm as QoS or other requirements may dictate or suggest. In some cases, reassembly and output buffering may be consolidated. Flexibility in buffer sizing and configuration is advantageously achieved using a common pool of memory with well-known configuration controls.

As is disclosed in more detail below, advantages of the present inventive ATM LSR structures include, at most, modest demands on buffer capacity to achieve a high level of performance. Service disciplines at the output buffer of illustrative embodiments include FIFO and fair queuing. Particular design parameters are disclosed for a range of operating conditions.

Performance of the present innovative implementations compares favorably with available alternative LSRs under a variety of operating conditions including varying switch utilization, variable packet size, variable packet interarrival times, variable packet size distribution, variable correlated interarrival times, the effects of slow sources, buffer overflow probability and packet delay.

**Brief Description of the Drawing**

These and other aspects of the present invention will be more fully understood upon a consideration of the following detailed description in light of the attached drawing, wherein:

FIG. 1A shows routing of IP packets in an illustrative layer 3 router.

FIG. 1B shows routing of IP packets using labels in a combined layer 3 and layer 2 switching arrangement.

FIG. 2A shows non-VC merging in an illustrative switch.

FIG. 2B shows VC merging in an illustrative switch.

FIG. 3 shows a generic VC-merge-capable ATM LSR in accordance with aspects of the present invention.

FIG. 4A shows a first illustrative structure for an output module of the ATM LSR of FIG. 3.

FIG. 4B shows a second illustrative structure for an output module of the ATM LSR of FIG. 3.

FIG. 4C shows a third illustrative structure for an output module of the ATM LSR of FIG. 3.

FIG. 5 is a state diagram useful in considering the arrival process at reassembly buffers in the output modules of FIGs. 3 or 4A-C.

FIGs. 6 and 7 are Markov transition diagrams useful in understanding the operation of reassembly buffers in the output modules of FIGs. 3 or 4A-C.

FIGs. 8-27 are performance diagrams illustrating operating aspects of various illustrative implementations of the ATM LSR system of FIG. 3 with various design or operational characteristics.

**Detailed Description**

As noted above, an important aspect of the operation of a VC-merge-capable ATM LSR is that cells belonging to different packets must not interleave during reassembly if the streams are to be merged to the same VC. Thus, in accordance with one aspect of the present invention, each incoming cell for a given packet is advantageously stored in a special buffer, the reassembly buffer, until the last cell of the packet arrives. When the last cell arrives, all cells in the packet are transferred in an atomic manner to an output buffer for transmission to the next hop.

In principle, the reassembly buffers can be placed at the input or output side of an ATM LSR. When these buffers are located at the input the switch fabric must transfer all cells belonging to a given packet in an atomic (unitary) manner to avoid interleaving of cells from different packets. This arrangement requires the switch fabric to perform frame switching, thereby limiting flexibility when multiple QoSs are to be supported. On the other hand, if the reassembly buffers are located at the output of the ATM LSR, the switch fabric can forward each cell independently, as in normal ATM switching.

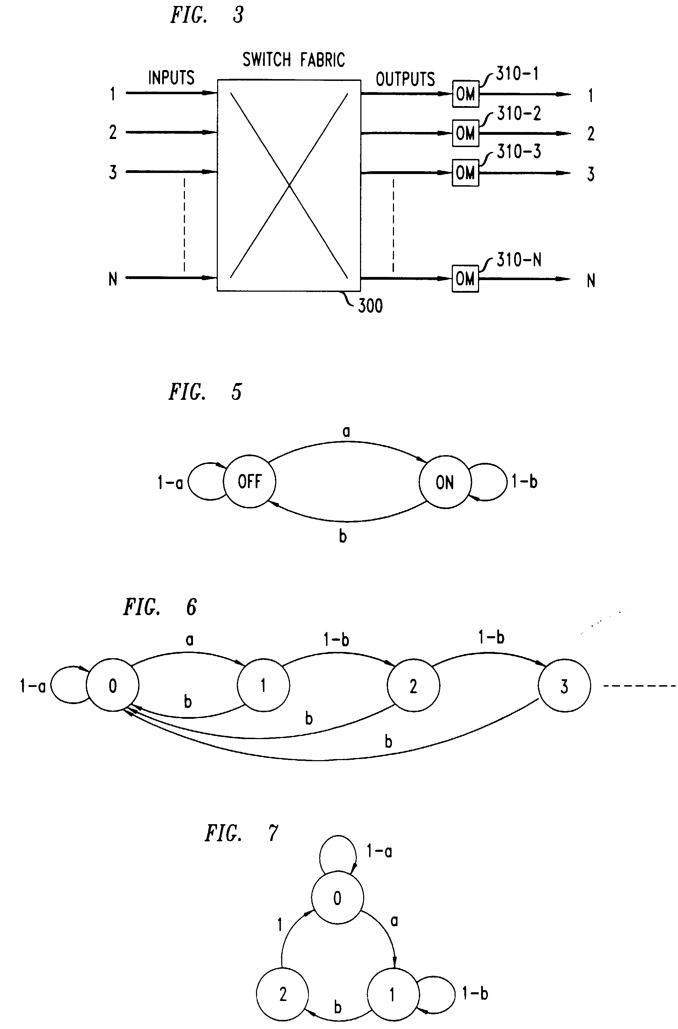

A generic output-buffered VC-merge-capable ATM LSR with VCI translation performed at the output in accordance with one aspect of the present invention is shown in FIG. 3. The switch comprises a non-blocking cell switch fabric 300 receiving input cells at input ports 320-$i$, $i$ - 1, 2, ..., $N$, and a plurality of output modules (OMs) 310-$i$, $i$ = 1,2,...,$N$, each receiving the output of a corresponding output port of switch fabric 300. Switch fabric 300 may be of any of a variety of ATM switch fabric types. Also shown in FIG. 3 in broken line representation is one or more optional signaling links 330 that may prove useful in particular embodiments. Thus, while many embodiments may use one or more input paths to provide signaling and control information (as is well known), it will prove advantageous in some cases to employ separate signaling channels. These separate optional signaling paths 330 in FIG. 3, may use any signaling format and protocol appropriate to the particular switch structure and fabric, and will typically supply control or state information in appropriate cases to or from one or more of the facilities of a switch, *e.g.*, input cell or packet processing, switch fabric controls, or output module operations.

In typical operation of the ATM LSR system of FIG. 3, each ATM cell arriving at an input port 320-i, i = 1, 2, ..., N advantageously has two fields appended to it, one containing an output port number and the other containing an input port number. Standard control or signaling information (*e.g.*, in the course of network, circuit or call setup or configuration) is used to apply these fields to direct each cell to an appropriate output port. Thus, based on the output port number, the switch fabric forwards each cell to the correct output port, just as in normal ATM switch operation. If VC merging is not implemented, then each of the OMs comprises an output buffer.

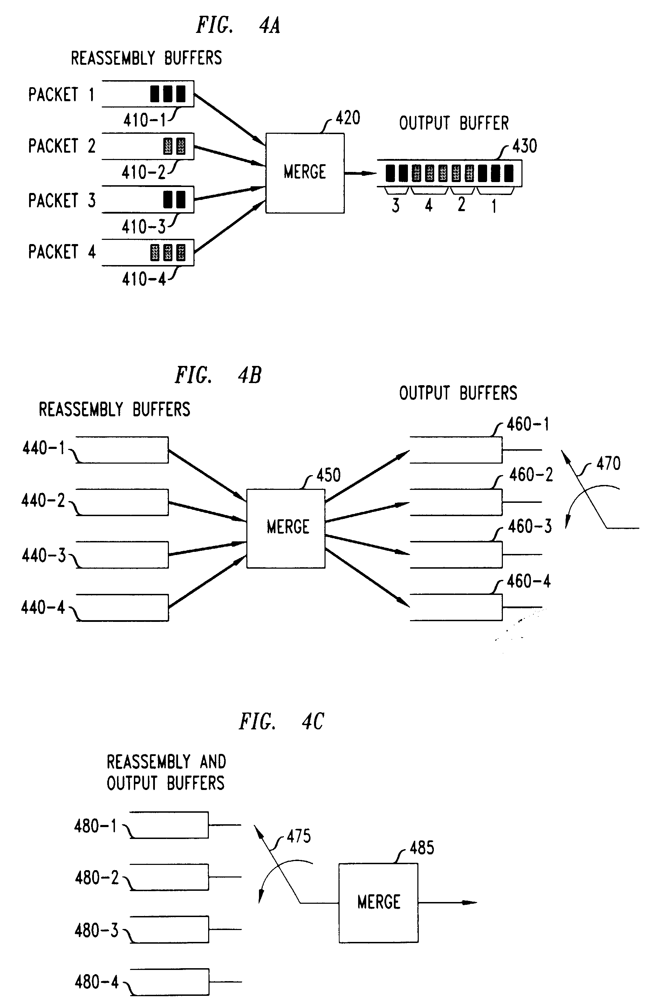

If VC merging is implemented in the ATM LSR of FIG. 3, the structure of the output module (OM) is illustratively implemented as shown in FIG. 4A for the case of a FIFO output buffer. Variations and extensions of VC merging buffer arrangements, including those for fair queuing scenarios, will be presented below. In the arrangement of FIG. 4A, each output module 310-i in FIG. 3 advantageously comprises a plurality (illustratively, four) of reassembly buffers (RBs) 410-i, i = 1-4, each corresponding to a particular input port and incoming VC value. If the VC values are unique to the entire switch rather than to the port, then a RB corresponds to an incoming VC value. The outputs of RBs 410-i are merged in merge circuit 420, with the merged result forwarded to output buffer (OB) 430 for delivery to an output path.

In preferred implementations, each RB and OB is a logical buffer, with a common pool of memory being used for both kinds of buffers and the (logical) structure of the individual buffers specified by links and/or pointers in standard fashion. The derivation of logical buffers from a common pool of memory is well known in the art and will not be elaborated upon here. In the arrangement of FIG. 4A, packets 1 and 3 are illustratively intended for a first destination, and packets 2 and 4 are intended for a second, different, destination. The presence of these differently destined packets at the same output port is indicative of their sharing the output port connected to a path that is common to both VCs. Though the packets are interleaved, the cells for a particular packet are not interleaved with the cells of any other packet, including, of course, the cells of any other packet directed to the same destination.

The use of RBs as shown in FIG. 4A insures that cells of a given packet do not interleave with other cells from another packet that are merged to the same VC. This mechanism (conveniently referred to as store-and-forward at the packet level) is advantageously accomplished by storing each incoming cell for a given packet at the RB until the last cell of that packet arrives. When the last cell arrives, all cells in the packet are transferred in a unitary (atomic) manner to the output buffer for transmission to the next hop. With physical memory in a common pool, the transfer can be readily performed on the fly by moving appropriate pointers, as is well known in the art. While a cut-through mode of operation at the RB is possible, it is generally not preferred, since it would result in waste of bandwidth if subsequent cells are delayed.

During the transfer of a packet to the output buffer, the incoming VCI is translated to the outgoing VCI, as is known. To save VC translation table space in the illustrative embodiments of FIGs. 3 and 4A, different incoming VCIs are desirably merged to the same outgoing VCI during the translation process if the cells are intended for the same destination. Thus, if all traffic is best-effort such *full-merging* can be implemented, with *all* incoming VCs destined for the same destination network being mapped to the same outgoing VC. However, when traffic comprises multiple classes, it is desirable to implement *partial merging,* with incoming VCs identified by the same (destination network, QoS) tuple being mapped to the same outgoing VC.

Regardless of whether full merging or partial merging is implemented, the output buffer 430 in an output module such as 310-i may comprise a single FIFO buffer (FIG. 4A) or multiple buffers (*e.g,* as in FIG. 4B), each corresponding to a destination network or (destination network, QoS). While using a single output buffer in an output module, the LSR effectively emulates frame switching. In the arrangement of FIG. 4B packets are reassembled in substantially the same manner as in the arrangement of FIG. 4A, *i.e.,* each reassembly buffer contains at most one complete packet. Once a packet is complete inside the reassembly buffer, it is shipped to one of the output buffers 460-i. The specific output buffer depends on the QoS and the outgoing VC value. As shown, all of the buffers are connected to the same link directed to the next hop.

When using multiple output buffers, however, the implementation of VC merging differs from frame switching in that cells of a given packet are not bound to be transmitted back-to-back. Selector 470 in FIG. 4B is operated in accordance with any desired scheduling algorithm to select cells from output buffers 460-i. If QoS in a particular case involves end-to-end delay, then the scheduling algorithm controlling selection of data from a particular output buffer may, for example, be arranged to impose a maximum delay for transiting each switch, such as the switch of FIG. 3. The effect would be to select more data from an affected output buffer when the maximum allowed delay could otherwise be exceeded. Timestamps upon arrival for input data (as compared with current time), or other measures of elapsed time for cells or packets at a particular switch are illustratively used in such cases to inform the selection at selector 470.

As will be seen below, fair queuing is readily implemented using this latter arrangement, so that cells from respective output buffers are served according to a specified QoS requirement. It is important to keep in mind that cell-by-cell scheduling can be implemented with VC merging, whereas only packet-by-packet scheduling can be implemented with frame switching. Thus, VC merging offers greater flexibility than frame switching and supports a wider range of QoS controls.

A data network comprising a plurality of switches of the type shown in FIG. 3 (illustratively with a variety of output buffering arrangements and scheduling algorithms) may be used to perform successive merges of data streams from a variety of sources. That is, at each node in a path through the network VC merging can be applied to yield a data stream directed toward a given destination (or destination, QoS) that includes data from many different original sources. A given merged stream may thus be VC-merged with another VC-merged input stream at a particular node leading to a destination (or destination, QoS).

While implementations of VC merging ATM LSRs discussed above in connection with FIGs. 3 and 4A are suitable for many best-effort traffic applications, it may be desirable to provide alternative embodiments for a variety of circumstances, e.g., circumstances involving extensive merging of flows. Thus, for example, when merging several flows, each of which is the result of upstream flow merges, it may be desired to give more bandwidth to a merged flow that comes from a greater number of sources, or otherwise requires more bandwidth. This can be achieved in the system structures discussed above by providing well-known processor-sharing services and a signaling system appropriate to the network or subnetwork. For present discussions, it can be assumed that an ATM LSR such as that in FIG. 3 receives any required service class or signaling information not available in the received flows from a separate VC or other input data source - such as signaling input 320 shown in FIG. 3. Other particular contexts may also benefit from particular allocations of bandwidth or other system resources.

Output module implementations for an ATM LSR of the type shown in FIG. 3 will include one or more processors for effecting the desired buffer and merger control operations in accordance with scheduling algorithms and practices well-known in the art in light of the present teachings. Thus, if VC merging is applied to flows that require some guaranteed level of service or some differentiated service, then a proportional service allocation based on the requirements of the merged flows can readily be implemented within the system arrangements presented herein.

By way of example, a fair queuing implementation of VC merging can be realized by design of the output modules 310-i in FIG. 3 to include multiple output buffers, with each output buffer arranged to accommodate streams of the same class. FIGs. 4B (discussed above) and 4C show two such implementations for realizing fair queuing.

The illustrative implementation of FIG. 4C again shows a plurality of buffers (illustratively four) 480-1 through 480-4. The arrangement shown there, however, provides for combined reassembly and output buffers. Thus, for example, the buffers 480-i in FIG. 4C may each include a plurality of buffers for storing the cells from a particular packet as they arrive. When a packet is reassembled, it awaits readout from selector 475 for application to a merged data stream using merge circuit 485. The reassembly may be accomplished on a reassembly buffer per packet basis, or more than one packet may be stored in a particular reassembly buffer. When a buffer includes at least one complete packet, it assumes the character of an output buffer from which cells can be read. In the implementation of FIG. 4C, a cell can only be serviced from an output buffer if there is at least one complete packet in the buffer. Unlike frame switching with fair queuing, which considers each packet as an atomic unit of data, VC merge with fair queuing can empty data on a cell-by-cell basis. This is because cells belonging to packets for different destinations are allowed to interleave under the control of merge circuit 485. An obvious advantage of VC merge with fair queuing is that a very long packet will not hamper the transmission of a small packet, as may happen in frame switching.

Scheduler 475 in the implementation of FIG. 4C advantageously identifies the output buffers whose outputs are to be merged. Recall that for the FIFO case of FIG. 4A, cells of the same label are transmitted out sequentially since they belong to the same packet. By way of contrast, in the output process of VC merge with fair queuing of FIG. 4C, the scheduler typically visits each output buffer sequentially per time slot, so each burst of cells typically includes cells with different labels, *i.e.,* cells from different packets.

*Modeling and Analysis*

To more fully understand the range of operating alternatives for VC-merge-capable ATM LSRs in accordance with aspects of the present invention, it proves useful to analyze the performance of such systems using a discrete time model in which a time slot corresponds to the transmission time of an ATM cell. For simplicity of presentation, it proves convenient to consider the case in which an OM of the type shown in FIGs. 3 and 4A contains one physically shared buffer for all the reassembly buffers and the output buffer. Also, a decomposition approach will be used for the analysis; each reassembly buffer and the output buffer are first analyzed independently. The cell distribution for the overall buffer is finally obtained by means of convolution.

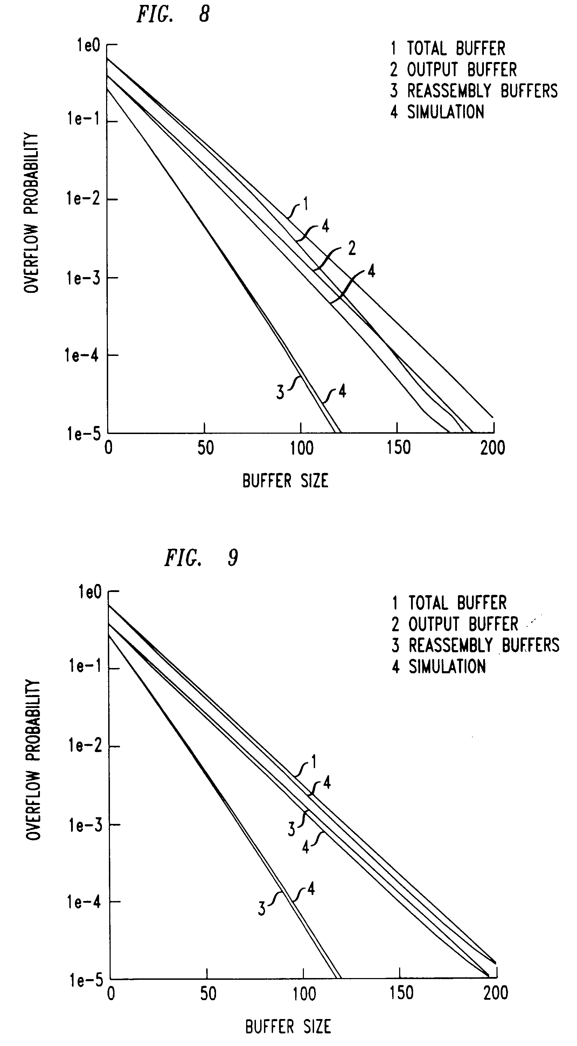

The illustrative case of full merging with a single FIFO output buffer is used for each ATM LSR in the MPLS domain. This implies that cells of a given packet will not interleave with the other cells of different packets. Now consider the packet arrival process on a given output port of the ATM switch. The arrival process on the output port can be modeled as a superposition of $N$ independent ON-OFF processes, each coming from one of the $N$ input ports. Cells within an ON period form a single packet. During an OFF period, the slots are idle. From this it becomes clear that only $N$ RBs are required per output port independent of the number of flows, since the cells within an ON period carry the same VC label. For present purposes, it will be assumed that cells are transmitted back-to-back during the ON period. This assumption will be relaxed in the following discussion. It also proves convenient to further assume that both the ON and OFF periods are geometrically distributed with the same parameters from each input port More general distributions may be used as well. The arrival process to each RB can then be modeled as an interrupted Bernoulli process (IBP), as shown in FIG. 5.

To analyze the RB, observe that during the OFF period, the buffer content at the RB must be zero. When the chain first makes a transition to the ON state, the content of the RB becomes one. For each subsequent transition to the same ON state, the content increases by one until the chain finally returns to the OFF state, indicating the end of a packet, and the content of the RB instantaneously drops to zero. Therefore, the Markov chain for each RB can be modeled as shown in FIG. 6. With $\pi_i$ as the steady-state probability that the RB contains i cells, then it can be readily shown that the steady-state probabilities are given by:

$$\pi_0 = b/(a + b) \tag{1}$$

$$\pi_1 = a\pi_0 \tag{2}$$

$$\pi_i = (1-b)\pi_{i-1}, \; i > 1 \tag{3}$$

To analyze the output buffer, it is first appropriate to characterize the departure process from the RB. Note that batches of cells are transferred from each RB to the output buffer with the batch size exactly equal to the corresponding ON period. The interarrival time of the batches (packets) consists of the sum of the OFF period and the ON period. An exact construction of the Markov chain for the departure process requires an infinite number of states. To simplify the model, it is assumed that the batch size is uncorrelated to its own interarrival time, and approximate the departure process by a three-state Markov chain as shown in FIG. 7. State 0 corresponds to the OFF period, and state 1 corresponds to the ON period. No cells are transmitted by the RB in these states. In state 2, the RB transmits a batch of cells whose size is geometrically distributed with parameter $b$.

The aggregate arrival process to the output buffer consists of a superposition of $N$ independent and identical three-state Markov chains. The correlation effect between the batch size and its interarrival time should decrease as $N$ increases. We can describe the aggregate arrival process by a discrete-time batch Markovian arrival process (D-BMAP). The underlying (or modulating) chain of the aggregate process can be described by the tuple $(n_0, n_1)$, where $n_0$ is the number of sources in state 0 and $n_1$ is the number of sources in state1 in a time slot. The number of sources in state 2 is $n_2 = N - n_0 - n_1$. With these definitions, the transition probability of the underlying chain from state $(i,j)$ to state $(i',j')$ is given by

$$p\genfrac{}{}{0pt}{}{(i',j')}{(i,j)} = \binom{i}{N-(i'+j)} a^{N-(i'+j)}(1-a)^{i-(N-(i'+j))} \binom{j}{N-(i'+j')} b^{N-(i'+j')}(1-b)^{j-(N-(i'+j'))}, \tag{4}$$

for $N\text{-}j\text{-}i \le i' \le N\text{-}j$ and $N\text{-}i'\text{-}j \le j' \le N\text{-}i'$. The number of states in the underlying Markov chain is $M = (N + 1)(N + 2)/2$. When $r$ sources are in state 2, the number of cell arrivals to the output buffer is given by the negative binomial distribution:

$$P\{A = i\} = \binom{i-1}{r-1} b^r (1-b)^{i-r}, \quad for \;\; i \ge r. \tag{5}$$

The steady-state distribution in the output buffer, can be determined using the result of the *D-BMAP/D*/1 queue, where the aggregate arrival process is modeled by a discrete-time batch Markovian arrival process with parameter matrices $D_0, D_1, D_2 \cdots$.

$$Let \; D = \left[ p\genfrac{}{}{0pt}{}{(i',j')}{(i,j)} \right]$$

be the underlying Markov chain to the output buffer, and let

$$D = \sum_{k=0}^{\infty} D_k,$$

where $D_k$ is the transition matrix that results in $k$ cell arrivals. For computational purposes, the summation is advantageously truncated to $K$ such that the probability that the batch size is greater than $K$ is negligible. Let the vector $x$ denote the steady-state vector for the $D$-$BMAP/D/1$ queue. Each component of $x$ is a vector $[x(0)x(1)x(2)\cdots]$, where x($i$) = [x($i$, 1) $x(i,2)\cdots x(i,M)$]. Here, $x(i,m)$ is the probability that the output buffer has i cells and the underlying chain is in state $m$.

Following the presentation in I. Widjaja, M. Neuts and J. M. Li., '''Conditional Overflow Probability and Profile Curve for Congestion Detection in ATM Networks," in *Proceedings of INFOCOM'96,* San Francisco, Apr. 1996, the algorithm to compute the vector **x** for the $D$-$BMAP/D/1$ queue can be summarized:

To compute the vector **x** for the $D$-$BMAP/D/I$ queue:

1. Compute the matrix G: Start with a stochastic matrix G(0) or G(0)= 0, iterate

$$G(n) = \sum_{k=0}^{K} D_k \left[ G(n-1) \right]^k , \qquad (6)$$

or

$$G(n) = (I - D_1)^{-1} \left\{ D_0 + \sum_{k=2}^{K} D_k \left[ G(n-1) \right]^k \right\}, \qquad (7)$$

until

$$\max_{j,j'} \left| G_{jj'}(n) - \left\{ \sum_{k=0}^{K} D_k \left[ G(n) \right]^k \right\} jj' \right| \le \varepsilon, \qquad (8)$$

where $\varepsilon$ is a small number, say $10^{-10}$. Note that the matrix polynomial $\sum D_k G^k$ can be efficiently evaluated by the Horner's rule. At each iteration, $G(n)$ is renormalized to be a stochastic matrix.

2. Compute the vector $x(0)$: Let

$$\overline{D_i} = \sum_{k=0}^{K-i} D_{i+k} G^k , \qquad (9)$$

$$D_1^{\bullet} = \sum_{k=1}^{K} k D_k , \qquad (10)$$

$$Z = D_0 + \overline{D_1}(I - \overline{D_1})^{-1} D_0, \qquad (11)$$

$$H = \overline{D_1} G, \qquad (12)$$

$$\rho = \pi \, D_1^* e \,. \tag{13}$$

Then

$$x(0) = \frac{1}{d} z, \tag{14}$$

where the vector z is the invariant probability vector of $Z$ satisfying **z**$Z$ = **z**, **z**$e$ = 1, and

$$d = 1 + \frac{1}{1-p} z \left[ I + (D - D_0 - H)(I - D + e\pi)^{-1} \right] D_1^* e. \tag{15}$$

3. Compute $x(i)$ *for i* ≥ 1: by Ramaswami's recurrence

$$x(i) = \left[ x(0)\overline{D}_i + \sum_{k=1}^{\min(i-1, i-K+1)} x(k)\overline{D}_{i-k+1} \right] (I - \overline{D}_1)^{-1}. \tag{16}$$

Let $Q_i$ denote that the steady-state probability that the shared buffer in the OM contains $i$ cells. Assuming that each logical buffer is independent. $Q_i$ can be obtained by convolving the distributions of the reassembly buffers and the output buffer. While this method is approximate (since the buffer contents at the reassembly buffer and the output buffer are negatively correlated), the results reveal that the negative correlation can be safely ignored.

*Some Results and Comparisons*

The accuracy of the above-described model can be verified using well-known simulation techniques. A discrete-time simulator is advantageously employed to keep track of each individual ATM cell. The simulator is constructed so that various performance measures on the cell level can be easily obtained.

FIG. 8 shows the buffer overflow probability as a function of buffer size, where the x-axis represents the buffer size in units of ATM cells. The average packet size is $B = 10$, the utilization is fixed to $\rho = 0.5$, and $N = 8$. As can be seen from FIG. 8, the assumption that the batch size is uncorrelated to its interarrival time makes the analytical results more conservative. However, the assumption that the output buffer and the reassembly buffer are uncorrelated appears not to add any additional discrepancy.

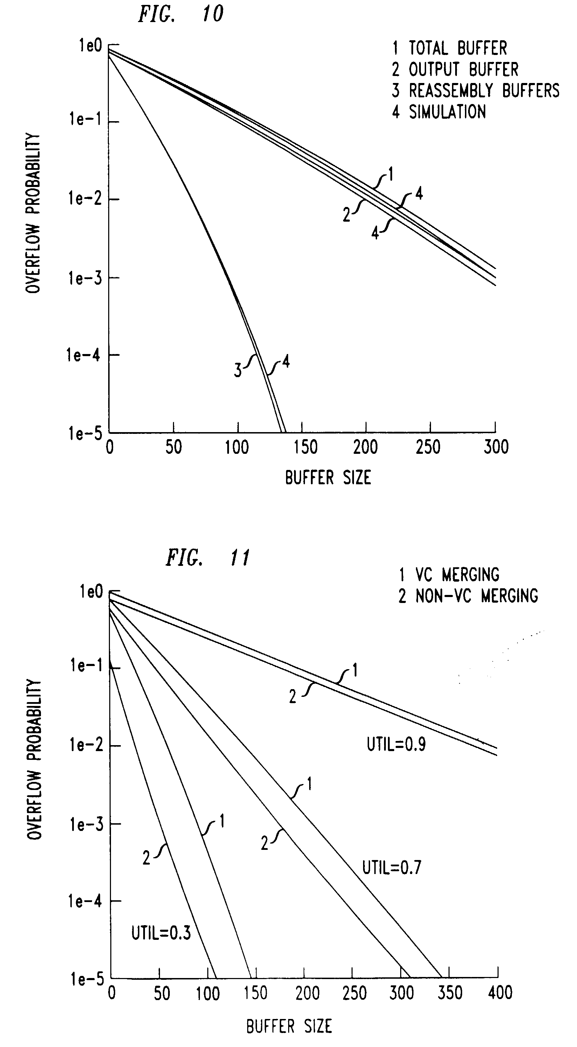

Because the correlation is diminished as $N$ is increased, we expect the analytical result to track the simulation result more closely as $N$ increases. This point is illustrated in FIG. 9, where $N = 16$. Again, the analytical result tracks the simulation result very well.

FIG. 10 shows the corresponding buffer overflow probability for the case where the utilization is 0.8. Again, good agreement is shown between the analytical and the simulation results.

*Performance Comparisonns for VC Merging and non-VC merging*

Non-VC merging switch is analogous to the traditional output-buffered ATM switch. Since each cell is a distinct unit of information, the non-VC-merging switch is a work-conserving system at the cell level. On the other hand, the VC-merging switch is non-work conserving - so its performance is always lower than that of the non-VC-merging switch. The following results show the effect of VC merging on the performance of ATM LSRs, including such measures as additional delay, additional buffer requirements and other factors when such LSRs are subject to different traffic conditions. The above-described analytical traffic model will be used to obtain such results when appropriate. The non-VC merging case can be easily analyzed using the D-BMAP/D/1 queue with N ONOFF processes feeding the output buffer. Simulation proves more convenient for other, more complicated, traffic scenarios. Throughout this section, $N$ = 16 will be used unless otherwise specified.

*Effect of Utilization on Additional Buffer Requirement*

The effect of switch utilization on additional buffer requirements for a given overflow probability. It proves convenient to analyze the VC-merging and non-VC merging case when the average packet size is equal to 10 cells. The results are plotted in FIG. 11 for different utilization values. As expected, the VC-merging ATM LSR requires more buffers than the non-VC merging ATM LSR. When the utilization is low, there may be many incomplete packets in the reassembly buffers at any given time, thus wasting storage resource. For example, when the utilization is 0.3, VC merging requires an additional storage of about 45 cells to achieve the same overflow probability. However, as the utilization increases to 0.9, the additional storage to achieve the same overflow probability drops to about 30 cells. The reason is that when traffic intensity increases, the VC-merging system becomes more work-conserving.

It is important to note that ATM LSRs are typically dimensioned at high utilization value (in the range of 0.8-0.9) to withstand harsh traffic conditions. At the utilization of 0.9, a VC-merge ATM LSR requires a buffer of size 976 cells to provide an overflow probability of $10^{-5}$, whereas an non-VC merge ATM switch requires a buffer of size 946. These numbers translate the additional buffer requirement for VC merging to about 3% - a very modest additional hardware cost.

*Effect of Packet Size on Additional Buffer Requirement*

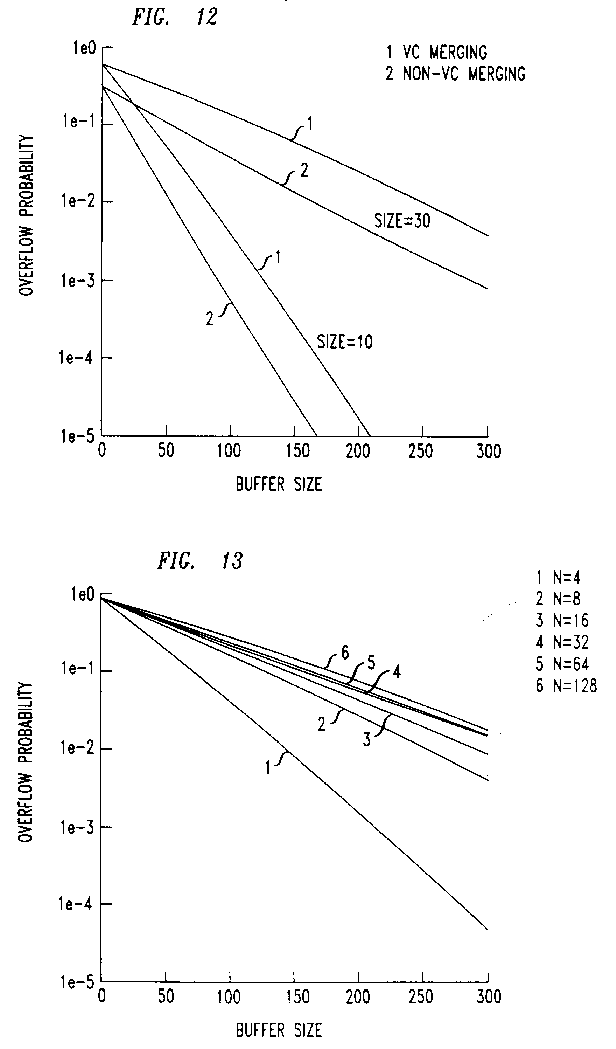

Design values for the average packet size will now be examined to assess the impact on the buffer require-ment. $\rho$ will be fixed at 0.5, and two different average packet sizes will be treated by way of example, *viz., B* = 10 and *B = 30.* Typical results are plotted in FIG. 12 for VC merging and non-VC merging. To achieve the same overflow probability, VC merging requires an -additional buffer of about 40 cells (or 4 packets) compared to non-VC merging when *B* = 10. When *B* = 30, the additional buffer requirement is about 90 cells (or 3 packets). In terms of the number of packets, the additional buffer requirement does not increase as the average packet size increases.

*Additional Buffer Overhead Due to Packet Reassembly*

Some concern has been expressed that VC merging may require too much buffering when the number of reassembly buffers increases, a condition that arises if the switch size is increased or if cells for packets going to different destinations are allowed to interleave. Thus, the concern has proven to be unfounded - since buffer sharing becomes more efficient as the number of reassembly buffers increases.

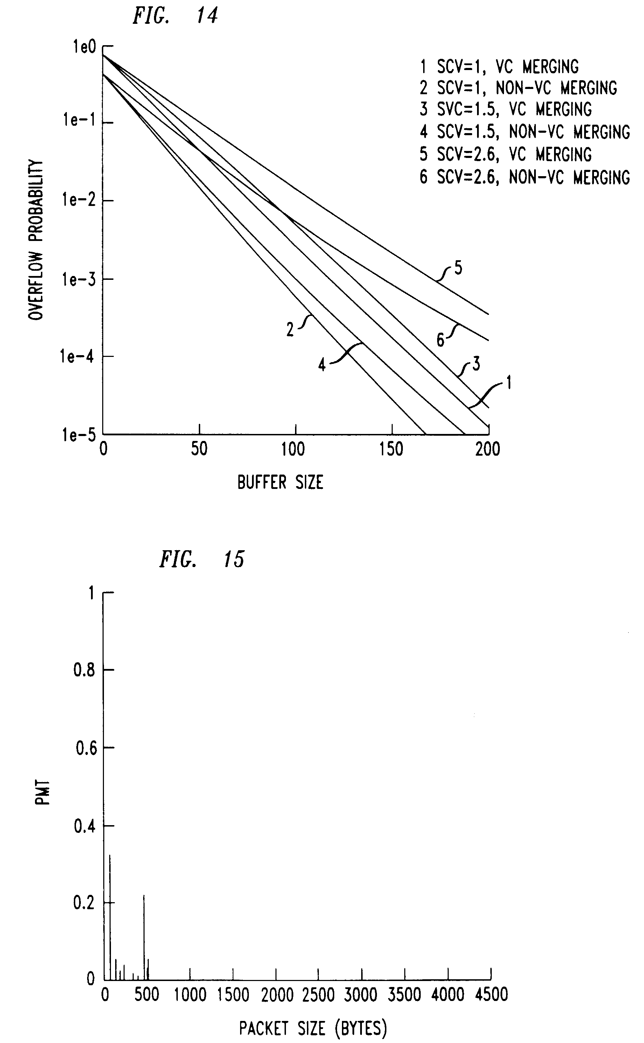

To demonstrate, the overflow probability for VC merging is plotted in FIG. 13 for several values of *N*. The utilization is fixed to 0.8 for each case, and the average packet size is chosen to be 10. For a given overflow probability, the increase in buffer requirement becomes less pronounced as *N* increases. Beyond a certain value, say, *N* = 32, the increase in buffer requirement becomes insignificant.

*Effect of Interarrival time on Additional Buffer Requirement*

Different traffic processes will now be considered as they apply to operation of ATM LSRs in accordance with present inventive embodiments. The previously described ON period distribution will be used, but the OFF period distribution will illustratively be changed from geometric to hypergeometric, a distribution which has a larger Square Coefficient of Variation (*SCV*), defined as the ratio of the variance to the square of the mean. FIG. 14 is a plot of curves for different values of *SCV* and $\rho$ = 0.5. As expected, the switch performance degrades as the *SCV* increases in both the VC-merging and non-VC merging cases. To achieve a buffer overflow probability of $10^{-4}$, the additional buffering required is about 40 cells when *SCV* = 1, 26 cells when *SCV* = 1.5, and 24 cells when *SCV* = 2.6. The result shows that VC merging becomes more work-conserving as *SCV* increases. So, as the interarrival time between packets becomes more bursty, the additional buffer requirement for VC merging diminishes.

*Effect of Internet Packets on Additional Buffer Requirement*

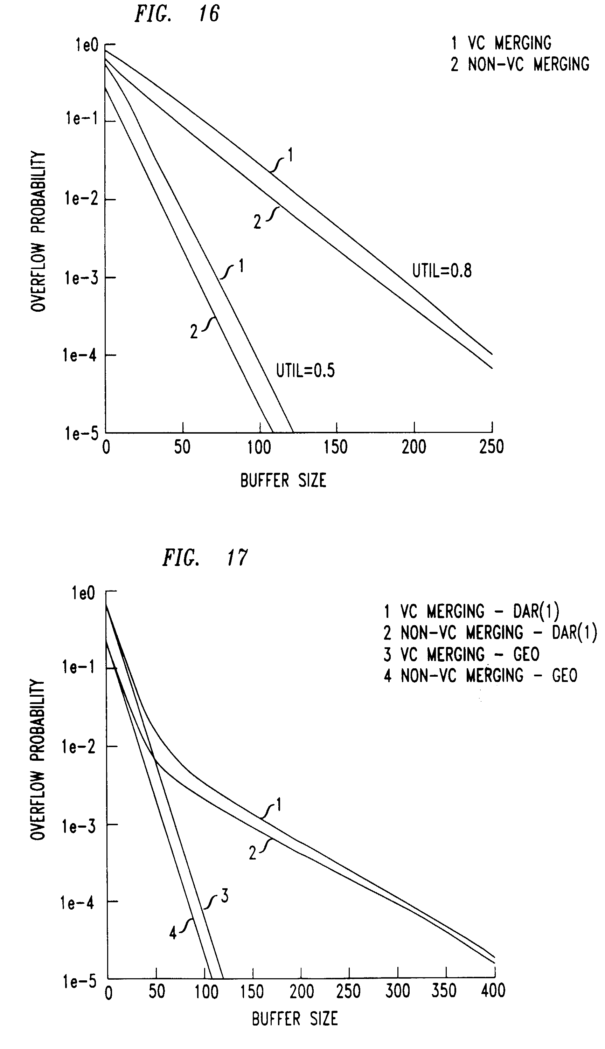

Up to now, the packet size has been modeled as a geometric distribution with a parameter. Now, the packet size distribution will be modified to one more typical of certain classes of traffic. In particular, since the initial deployment of VC-merge capable ATM LSRs is likely to be in the core network, it is more convenient to consider the packet size distribution in the Wide Area Network. To this end, data given in WAN Packet Size Distribution, *http:/hvww.nlanr.net/NA/Learn/packetsizes.html* will be used for reference. Thus, for example, data collected on Feb 10, 1996, in a typical network, are shown in FIG. 15 in the form of probability mass function versus packet size in bytes. Data collected at other dates closely resemble that shown in FIG. 15. The illustrative distribution appears bi-modal with two main masses, one at 40 bytes (about a third) due to TCP acknowledgment packets, and another at 552 bytes (about 22 percent) due to Maximum Transmission Unit (MTU) limitations in many routers. Other prominent packet sizes include 72 bytes (about 4.1 percent), 576 bytes (about 3.6 percent), 44 bytes (about 3 percent), 185 bytes (about 2.7 percent), and 1500 bytes (about 1.5 percent) due to Ethernet MTU. Other presentations of packet sizes show that there are some packets that are over 4,000 bytes long. The mean packet size for the example data is 257 bytes, and the variance is 84,287 bytes$^2$. Thus, the *SCV* for the Internet packet size is about 1.1.

To convert the IP packet size in bytes to ATM cells, assuming the typical use of AAL 5 with null encapsulation, the additional overhead in AAL 5 is 8 bytes long. See, for example, K. Thompson, G.J. Miller and R. Wilder "Wide-Area Internet Traffic Patterns and Characteristics," *IEEE NETWORK,* No. 6, Vol. 11, Nov/Dec 1997. Given that the IP packet size is x bytes, the corresponding number of ATM cells is [(*x* + 8)/48]. Using the null encapsulation technique, the average packet size is about 6.2 ATM cells.

Fig. 16 shows the buffer overflow probability against the buffer size using the Internet packet size distribution. The OFF-period is assumed to have a geometric distribution. Again, the same behavior as before is displayed, except that the buffer requirement drops with Internet packets due to smaller average packet size.

*Effect of Correlated Interarrival Times on Additional Buffer Requirement*

To model correlated interarrival times, it proves convenient to use the DAR(p) process (discrete autoregressive process of order *p*) described in J. Heinanen, "Multiprotocol Encapsulation over ATM Adaptation Layer 5," RFC 1483, Jul. 1993. This process has been used to accurately model video traffic, for example. See, P. Jacobs and P. Lewis, "Discrete Time Series Generated by Mixtures III: Autoregressive Processes (DAR(p))," Technical Report NPS55-78-022, Naval Postgraduate School, 1978.

The DAR(*p*) process is a *p*-th order (lag-p) discrete-time Markov chain $S_n$, *n* = 0, 1, 2,.... The state of the process at time *n* depends explicitly on the states at times (*n* - 1),...,(*n* - *p*). The process is specified by the stationary marginal distribution and several other chosen parameters which, independently of the marginal distribution, determine the correlation structure. Specifically, DAR(*p*) process is defined as follows. Let $\{\varepsilon_n\}$ be a sequence of i.i.d. random variables taking values in *Z*, the set of integers, with distribution $\pi$. Let $\{V_n\}$ be a sequence of Bernoulli random variables with $P(V_n = 1) = 1 - P(V_n = 0) = \rho$ for $0 \leq \rho < 1$. For the DAR(1) process, $\rho$ represents the first-lag autocorrelation. Let $\{A_n\}$ be a sequence of i.i.d. random variables taking values in $\{1, 2, \cdots, p\}$ with $P(A_n = i) = a_i$, *i* = 1,2,$\cdots$,*p* with $\sum a_i = 1$. Let

$$S_n = V_n S_{n-A_n} + (1-V_n)\varepsilon_n \qquad (17)$$

for n = 1, 2,$\cdots$. Then, the process $S_n$ is called the DAR(*p*) process. Note that this process has $\rho$ degrees of freedom, and therefore its first *p* autocorrelations can be specified as desired, for example to match the first *p* lags of an empirical correlation function.

Fig. 17 compares the overflow probability for the case where the interarrival time between packets is gepmetric and independent, and the case where the interarrival time is geometric and correlated to the previous one with coefficient of correlation equal to 0.9. The utilization is fixed to 0.5 in each case. The high correlation of this *DAR*(1) process degrades the switch performance significantly for both VC-merging and non-VC merging cases. However, the additional amount of buffering with VC merging decreases for the *DAR*(1) process.

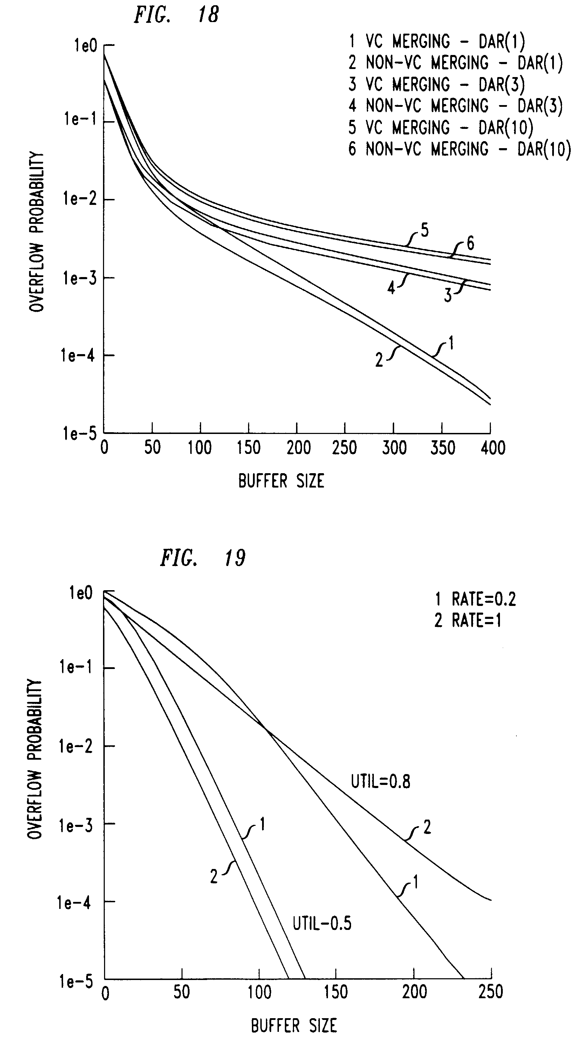

Fig. 18 compares the overflow probability for *DAR*(1), *DAR*(3), and *DAR*(10), again for the case where $\rho$ = 0.5. Although, the overflow probability increases as $\rho$ increases, the additional amount buffering actually decreases for VC merging. One can easily conclude from the above results that higher-order correlation or long-range dependence will result in similar qualitative performance.

*Slow Sources*

The discussions up to now have assumed that cells within a packet arrive back-to-back. With slow sources, adjacent cells would typically be spaced by idle slots. Adjacent cells within the same packet may also be perturbed and spaced as these cells travel downstream due to the merging and splitting of cells at preceding nodes.

In this section, it will be assumed that each source transmits at the rate of $r_s$ ($0 \leq r_s \leq 1$), in units of link speed, to the ATM LSR. To capture the merging and splitting of cells as they travel in the network, it will also be assumed that the cell interarrival time within a packet is randomly perturbed. To model this perturbation, the original ON period is stretched by $1/r_s$ and a Bernoulli coin with parameter $r_s$ is flipped during the stretched ON period. In other words, a slot contains a cell with probability $r_s$, and is idle with probability $1 - r_s$ during the ON period. By doing so, the average packet size remains the same as $r_s$ is varied. Slow sources on the VC-merge ATM LSR are advantageously simulated using the Internet packet size distribution. The curves for $r_s$ - 1 and $r_s$ = 0.2 are displayed in FIG. 19. The packet interarrival time is assumed to be geometrically distributed. Reducing the source rate in general reduces the stresses on the ATM LSRs, since the traffic becomes smoother. With VC merging, slow sources also have the effect of increasing the reassembly time. These two forces are opposing, and neither is more dominant for all cases. At $\rho = 0.5$, the reassembly time is more dominant and causes the slow source (with $r_s = 0.2$) to require more buffering than the fast source (with $r_s = 1$). At $\rho = 0.8$, the smoother traffic is more dominant and causes the slow source (with $r_s = 0.2$) to require less buffering than the fast source (with $r_s = 1$). This result again has practical consequences in ATM switch design where buffer dimensioning is performed at reasonably high utilization. In this situation, slow sources only help.

*Packet Delay*

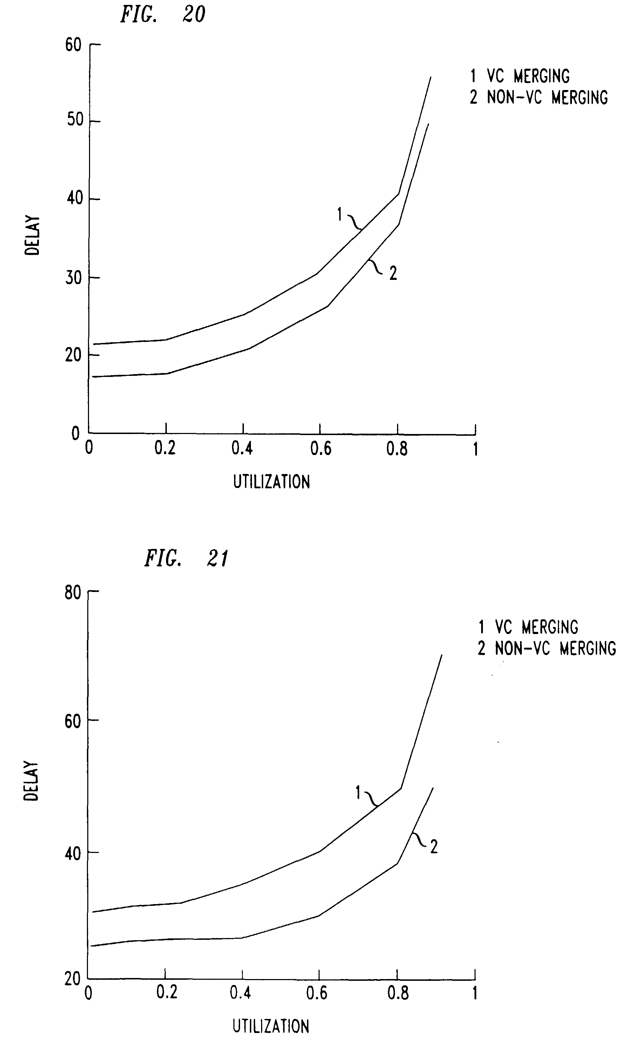

It is also of interest to see the impact of cell reassembly on packet delay. The delay of a packet is conveniently defined as the time between the arrival of the first cell of a packet at the ATM LSR and the departure of the last cell of the same packet. The average packet delay is plotted in FIG. 20 as a function of utilization for both VC-merging and non-VC merging switches for the case $r_s = 1$ (back-to-back cells in a packet). Again., the Internet packet size distribution is used as a typical realistic scenario. The interarrival time of packets is geometrically distributed. Although the difference in the worst-case delay between VC-merging and non-VC merging can be theoretically very large, observations have shown that the difference in average delays of the two systems to be consistently about one average packet time for a wide range of utilization. The difference is due to the average time needed to reassemble a packet.

To see the effect of cell spacing in a packet, the average packet delay is plotted for $r_s = 0.2$ in Fig. 21. The difference in average delays of VC merging and non-VC merging is seen to increase to a few packet times (approximately 20 cells at high utilization). It should be noted that when a VC-merge capable ATM switch reassembles packets, in effect it performs the task that the receiver has to do otherwise. From a practical point-of-view, an increase in 20 cells translates to about 60 $\mu sec$ at OC-3 link speed. This additional delay is insignificant for most applications. For delay-sensitive traffic, using smaller packets can reduce additional delay.

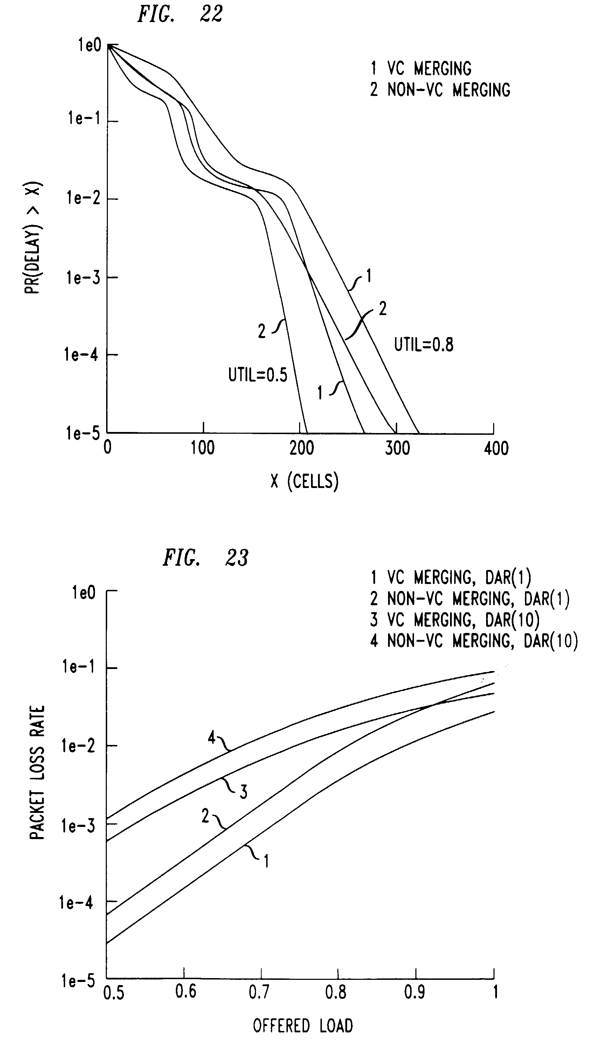

To see the packet delay in more detail, it proves useful to examine the delay distribution for both VC merging and non-VC merging. Results are illustrated in Fig. 22 for the case where $r_s = 0.2$ and $\rho = 0.5, 0.8$. The two "humps" in each curve are due to the prominent masses at the corresponding packet sizes. The delay distribution is more useful when time-sensitive traffic with maximum delay constraint is being considered. For example, from Fig. 22, the average packet delay for VC merging is about 50 cells when $\rho = 0.8$. On the other hand, if the application can tolerate an overflow probability of $10^{-3}$, then the maximum packet delay can reach to about 250 cells. Comparing the curves for VC merging and non-VC merging for $\rho = 0.5$ and $\rho = 0.8$, the same conclusion can be reached that VC merging approaches non-VC merging as utilization increases.

*Packet Loss Rate*

The above-presented discussions have emphasized buffer requirements based on overflow probability at the cell level. At the packet level, a more relevant performance metric is packet loss performance, rather than the cell loss performance. In this section, a comparisonn is made between packet loss performance for VC merging and non-VC merging.

It is well-known that when an ATM switch discards a cell, it causes a whole packet to be unusable for most purposes, and wastes transmission bandwidth. Since VC merging can readily emulate frame switching, a VC-merge-capable ATM LSR will discard full packets when the buffer becomes full. This is done by emptying the associated reassembly buffer and dropping the subsequent cells when a cell is to be discarded. On the other hand, a non-VC merge -ATM LSR does not inherently discard a full packet when the buffer becomes full, thus making the system more wasteful. To treat this problem, an Early Packet Discard (EPD) mode of operation is advantageously adopted. This approach attempts to discard full packets when the buffer exceeds a certain threshold below the maximum buffer size. See, A. Romanow and S. Floyd, "Dynamics of TCP Traffic Over ATM Networks," *IEEE Journal on Selected Areas in Communications, vol. 13,* no. 4, pp. 633-641, May 1995.

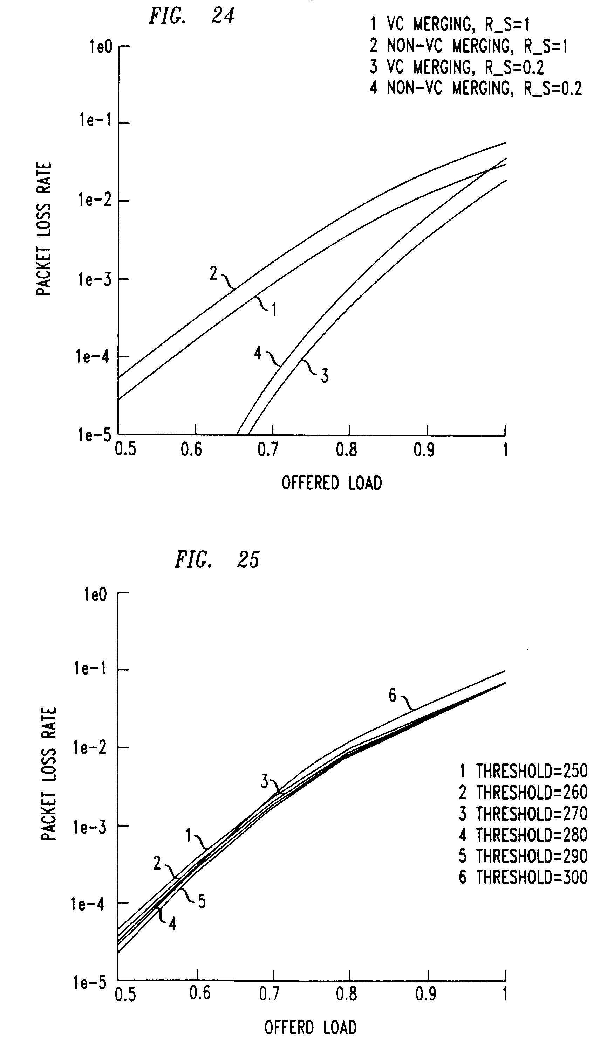

FIG. 23 compares VC merging and non-VC merging in terms of packet loss rate for the case where *N = 16,* r, = 1. The Internet packet size distribution is used. The buffer size is *300* and the EPD threshold is set to 280, which is found to be a good value (see FIG. 25). It should be noted that the optimum value of the EPD threshold in general depends on many factors such as traffic characteristics, packet size, and utilization. From FIG. 23 it can be seen that more correlated traffic (i.e., *DAR(10))* stresses the LSR more, and thus discards more packets or achieves lower goodput. Also note that VC merging consistently outperforms non-VC merging regardless of the burstiness of the traffic.

In FIG. 24 only the *DAR(t)* process is reflected, but $r_s$ is varied. Again, it is seen that VC merging achieves a higher goodput than non-VC merging with EPD for different peak rates. Similar results obtain for other values of *N,* and for different buffer sizes. The importance of engineering a good EPD threshold is illustrated by varying the threshold value while observing the packet loss rate. FIG. 25 assumes that *N = 16,* r, = 1, and that the *DAR(1)* process is used.

As can be observed, a value of *280* appears suitable for this situation. At low utilization, a higher threshold value is better. But when the utilization is very high, EPD does not work efficiently and the system is forced to carry out Partial Packet Discard (PPD), which results in lower goodput.

*Performance of VC Merge with Fair Queuing*

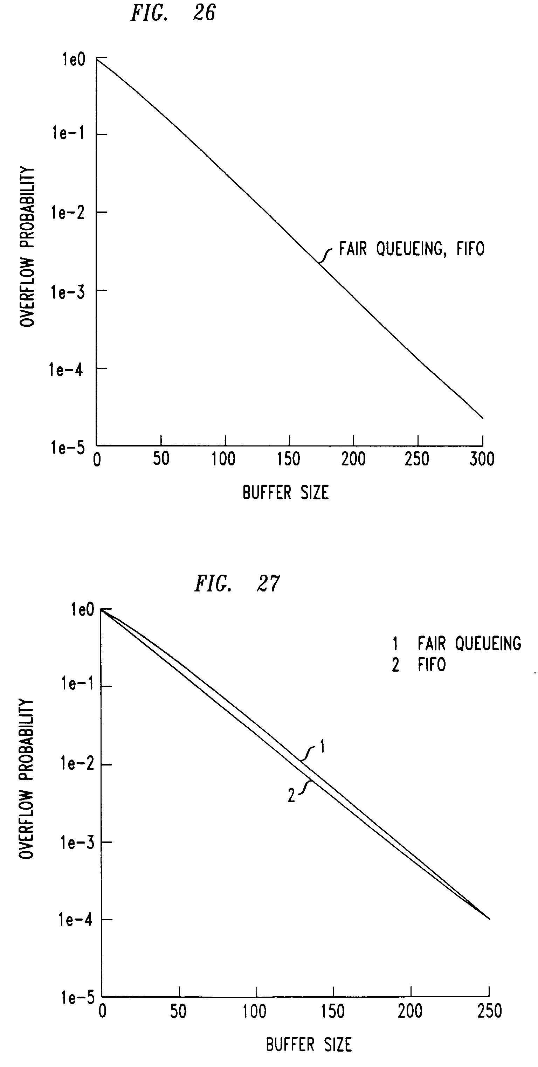

This section discusses the performance of a fair queuing implementation of VC merging. To study the impact of fair queuing on buffer requirement, it again proves useful to assume that all buffers share a common physical memory pool. For simplicity, fair queuing is implemented with a round-robin scheduler which empties a cell., if any, at each output buffer at each time slot. FIG. 27 shows a comparison of the buffer requirements for fair queuing and FIFO implementations of VC merging, with the same arrival process, for the case where N = 16, $r_s$ = 1, and utilization is 0.8. The Internet packet size distribution is used. As FIG. 27 shows, the buffer requirement is identical for both cases since fair queuing only changes the order in which cells are transmitted out. Both systems maintain the same buffer statistics.

Recall that in the FIFO case, cells of the same label are transmitted out sequentially since they belong to the same packet. Now consider the output process of VC merge with fair queuing. Because the scheduler visits each output buffer sequentially per time slot, each burst of cells typically consists of cells with different labels since the cells could come from different packets. In the following, we assume that the output processes of fair queuing systems drive the input process of VC merge with fair queuing. The input process of VC merge with FIFO is assumed to be driven by the output processes of FIFO queuing systems. Fair queuing essentially intersperse the cells of a packet as they arrive at a reassembly buffer. This has the effect of prolonging the reassembly process, thereby making the system less work- conserving. This phenomenon is demonstrated in FIG. 29, but the penalty in additional buffering is seen to not be significant.

With regard to packet goodput, VC merging with fair queuing outperforms non-VC merging with fair queuing and EPD. This follows from the presented earlier and because fair queuing changes only the order in which cells/ packets are served.

**Claims**

1. A method for switching data packets in a switch having a plurality of input ports, a switch fabric and a plurality of output ports, each packet having a destination and including a plurality of cells, cells for each individual packet arriving at the same input port of said switch, the method comprising

   delivering all cells arriving at input ports to the same output port when they have the same destination,

   buffering said cells delivered to each output port, said buffering comprising reassembling cells from a packet arriving from a respective input port in a respective reassembly buffer, and

   when all cells for a packet have been reassembled, making said reassembled cells available for output to a virtual circuit (VC) associated with the packet destination.

2. The method of claim 1 wherein said destination comprises a destination network and a quality of service (QoS), and wherein said buffering of said cells delivered to each output port comprises buffering cells for each different destination in a separate reassembly buffer.

3. The method of claim 1 further comprising the step of selectively merging cells from said reassembly buffers to a common VC.

4. The method of claim 3 wherein said step of selectively merging comprises merging cells from said reassembly buffers having a reassembled packet, each of said reassembled packets having a common destination.

5. The method of claim 1 wherein said switch further comprises signaling facilities for receiving messages for controlling the operation of said switch.

6. The method of claim 5 wherein said method comprises receiving messages containing routing information for routing calls from said input ports to said output ports, and storing said routing information.

7. The method of claim 6 wherein said routing of cells at an input ports to said output ports comprises appending to each cell arriving at an input port information identifying said input port and the output port to which it is to be delivered.

8. The method of claim 1 wherein making said reassembled cells available comprises sequentially storing reassembled packets from one or more input ports in a FIFO output buffer.

9. The method of claim 8 wherein said step of sequentially storing comprises transferring reassembled packets to said FIFO buffer in an atomic manner.

10. The method of claim 2 wherein said making said reassembled cells available comprises merging cells from reassembled packets to respective output buffers; said packets having a common destination, and transferring cells from said output buffers in accordance with a selection algorithm.

11. The method of claim 10 wherein said separate reassembly buffers and said output buffers are combined, said separate reassembly buffers operating as output buffers upon storing at least one reassembled packet and until all cells of reassembled packets have been transferred.

12. A switch for switching data packets, each packet having a destination and including a plurality of cells, the switch comprising

a plurality of input ports, all cells of a particular packet arriving at the same input port,

a switch fabric,

a plurality of output ports,

means for delivering to the same output port all cells arriving at input ports and having the same destination,

means for buffering said cells delivered to each output port to reassemble cells from the same packet,

means for making said reassembled cells available for output to a virtual circuit (VC) associated with the packet destination when all cells for a packet have been reassembled.

**FIG. 1A**

LAYER 3 ROUTING

**FIG. 1B**

LAYER 2 SWITCHING

*FIG. 2A*

INPUT CELL STREAMS    VCI TABLE

OUTPUT CELL STREAM

WITHOUT VC MERGING

*FIG. 2B*

INPUT CELL STREAMS    VCI TABLE

OUTPUT CELL STREAM

WITH VC MERGING

FIG. 3

SWITCH FABRIC

INPUTS        OUTPUTS

1                        1
2                        2
3                        3

N                        N

310-1
310-2
310-3
310-N
300

FIG. 5

a

1-a ( OFF )          ( ON ) 1-b

b

FIG. 6

a        1-b        1-b

1-a ( 0 )    ( 1 )    ( 2 )    ( 3 ) - - - - -

b

b

b

FIG. 7

1-a

( 0 )

1        a

( 2 )    ( 1 ) 1-b

b

FIG. 4A

REASSEMBLY BUFFERS

PACKET 1
410-1

PACKET 2
410-2

PACKET 3
410-3

PACKET 4
410-4

420
MERGE

OUTPUT BUFFER
430

3  4  2  1

FIG. 4B

REASSEMBLY BUFFERS

440-1

440-2

440-3

440-4

450
MERGE

OUTPUT BUFFERS

460-1

460-2

460-3

460-4

470

FIG. 4C

REASSEMBLY AND
OUTPUT BUFFERS

480-1

480-2

480-3

480-4

475

485
MERGE

## FIG. 8

1 TOTAL BUFFER
2 OUTPUT BUFFER
3 REASSEMBLY BUFFERS
4 SIMULATION

## FIG. 9

1 TOTAL BUFFER
2 OUTPUT BUFFER
3 REASSEMBLY BUFFERS
4 SIMULATION

*FIG. 10*

1 TOTAL BUFFER
2 OUTPUT BUFFER
3 REASSEMBLY BUFFERS
4 SIMULATION

*FIG. 11*

1 VC MERGING
2 NON-VC MERGING

FIG. 12

1 VC MERGING
2 NON-VC MERGING

FIG. 13

1 N=4
2 N=8
3 N=16
4 N=32
5 N=64
6 N=128

21

*FIG. 14*

1 SCV=1, VC MERGING
2 SCV=1, NON-VC MERGING
3 SVC=1.5, VC MERGING
4 SCV=1.5, NON-VC MERGING
5 SCV=2.6, VC MERGING
6 SCV=2.6, NON-VC MERGING

*FIG. 15*

FIG. 16

FIG. 17

FIG. 18

1 VC MERGING - DAR(1)
2 NON-VC MERGING - DAR(1)
3 VC MERGING - DAR(3)
4 NON-VC MERGING - DAR(3)
5 VC MERGING - DAR(10)
6 NON-VC MERGING - DAR(10)

FIG. 19

1 RATE=0.2
2 RATE=1

UTIL=0.8

UTIL=0.5

FIG. 20

FIG. 21

*FIG.* 22

PR(DELAY) > X)

1 VC MERGING
2 NON-VC MERGING

UTIL=0.8

UTIL=0.5

X (CELLS)

*FIG.* 23

PACKET LOSS RATE

1 VC MERGING, DAR(1)
2 NON-VC MERGING, DAR(1)
3 VC MERGING, DAR(10)
4 NON-VC MERGING, DAR(10)

OFFERED LOAD

FIG. 24

1 VC MERGING, R_S=1
2 NON-VC MERGING, R_S=1
3 VC MERGING, R_S=0.2
4 NON-VC MERGING, R_S=0.2

FIG. 25

1 THRESHOLD=250
2 THRESHOLD=260
3 THRESHOLD=270
4 THRESHOLD=280
5 THRESHOLD=290
6 THRESHOLD=300

*FIG. 26*

*FIG. 27*